# EUROPÄISCHE PATENTSCHRIFT

(11) **EP 1 777 189 B1**
(45) Veröffentlichungstag und Bekanntmachung des Hinweises auf die Patenterteilung: **05.01.2011**
(21) Anmeldenummer: 06122470.5
(22) Anmeldetag: 17.10.2006
(51) Int. Cl.: B66B 11/00, F16G 5/20

(54) **Tragmittelsystem mit Treibscheibe und Tragmittel sowie Aufzugsanlage mit einem solchen Tragmittelsystem**
Carrying means device comprising a traction sheave and carrying means as well as an elevator comprising said carrying means device
Dispositif de moyen porteur comprenant poulie d'entraînement et moyen porteur ainsi qu'un ascenseur comprenant un tel dispositif de moyen porteur

(30) Priorität: 21.10.2005 EP 05109821
(43) Veröffentlichungstag der Anmeldung: 25.04.2007
(73) Patentinhaber: Inventio AG, 6052 Hergiswil (CH)
(72) Erfinder: Ach, Ernst, 6030 Ebikon (CH)

(56) Entgegenhaltungen:
- EP-A- 1 555 234
- EP-A- 1 561 720
- US-A- 4 047 446
- US-A- 5 055 090
- US-A- 5 308 291
- US-A- 5 803 855

## Beschreibung

Gegenstand der Erfindung ist ein Tragmittelsystem, das mindestens eine Treibscheibe und ein riemenartiges Tragmittel umfasst und zum Bewegen einer Last dient, sowie eine Aufzugsanlage mit einem solchen Tragmittelsystem. Anwendungsgebiete für ein solches Tragmittelsystem sind beispielsweise: Trag- und Antriebssysteme für Kabinen von Personen- und Lastenaufzügen, für Bergwerks-Fördereinrichtungen, für Hubvorrichtungen von Hochregalfahrzeugen, für Hubeinrichtungen an Stapelfahrzeugen, für Hubeinrichtungen in Fördersystemen von Produktions- Verpackungslinien, für Bürstenhebeeinrichtungen in Waschanlagen, für Hebeeinrichtungen in Fitness-Trainingsgeräten, etc. Das Tragmittelsystem eignet sich beispielsweise auch für die Anwendung als Fördergurt von Bandförderern oder Becherförderern.

Das erfindungsgemässe Tragmittelsystem wird im Folgenden anhand seiner Anwendung als Tragmittelsystem einer Aufzugsanlage beschrieben.

Aufzugsanlagen weisen üblicherweise eine Aufzugskabine und ein Gegengewicht auf, die in einem Aufzugsschacht oder entlang freistehender Führungseinrichtungen bewegbar sind. Zum Erzeugen der Bewegung weist die Aufzugsanlage eine Antriebseinheit mit mindestens einem Treibelement in Form einer Treibscheibe auf, wobei die Treibscheibe über mindestens ein flexibles Trag- und/oder Antriebsmittel die Aufzugkabine und das Gegengewicht trägt und die erforderlichen Antriebskräfte auf diese überträgt. Erforderliche zusätzliche Umlenkungen des Trag- und Antriebsmittels werden üblicherweise durch Umlenkelemente in Form von Umlenkscheiben realisiert.

Im Folgenden wird das Trag- und/oder Antriebsmittel nur noch als Tragmittel bezeichnet, und wo sich die Beschreibung sowohl auf Treibscheiben als auch auf Umlenkscheiben bezieht, sind diese als Tragmittelscheiben benannt.
Es ist jedoch nicht zwingend, dass die Tragmittelscheiben eine eigentliche Scheibenform aufweisen, sondern diese können auch die Form einer Welle oder Achse haben.

Aus EP 1 555 234 A1 ist eine Aufzugsanlage bekannt, bei welcher als Tragmittel für die Aufzugskabine Keilrippenriemen verwendet werden. Diese umfassen einen aus einem elastischen Material (Gummi, Elastomer) hergestellten flachriemenartigen Riemenkörper, der auf seiner der Treibscheibe zugewandten Lauffläche mehrere in Riemenlängsrichtung verlaufende Rippen aufweist. Diese Rippen wirken mit korrespondierenden Rillen in der Peripherie von Treib- oder Umlenkscheiben zusammen, um einerseits den Keilrippenriemen auf den Tragmittelscheiben zu führen und andererseits die Traktionsfähigkeit zwischen der Treibscheibe und dem Tragmittel zu erhöhen. Die Rippen und Rillen haben dreieck- oder trapezförmige, d. h. keilförmige Querschnitte. In die Riemenkörper der Keilrippenriemen sind in Riemenlängsrichtung orientierte, aus metallischen oder nichtmetallischen Litzen bestehende Zugträger eingebettet, die dem Tragmittel die erforderliche Zugfestigkeit und Längssteifigkeit verleihen.

Die in EP 1 555 234 A1 offenbarte Aufzugsanlage, bei der als Tragmittel Keilrippenriemen verwendet werden, weist gewisse Nachteile auf. Einer der Nachteile besteht darin, dass der Keilrippenriemen nicht eine optimale Treibfähigkeit erreicht und die resultierende Treibfähigkeit im Verlauf der Betriebsdauer nicht konstant bleibt. Diese Probleme resultieren daraus, dass ein erheblicher, jedoch im Verlauf der Betriebszeit nicht konstanter Teil der vom Keilrippenriemen auf die Treibscheibe übertragenen Radialkräfte nicht über die schrägen Flanken der Rippen und Rillen sondern im Bereich der Rippenkämme und Rillengründe in annähernd radialer Richtung übertragen wird, weil die Rippenkämme in den korrespondierenden Rillengründen aufliegen. Dieser nicht klar bestimmbare und nicht konstante Teil der Radialkräfte wird nicht oder nur in geringem Mass durch Keilwirkung zwischen den schrägen Flanken in erhöhte Normalkräfte zwischen Riemen und Treibscheibe umgesetzt. Ausserdem besteht bei dem im zitierten Stand der Technik beschriebenen Tragmittel das Problem, dass in den Rillen der Tragmittelscheiben wie auch in den Rillen des Tragmittels Schmutz und Riemenabrieb angesammelt und verdichtet wird. Dies hat einerseits zur Folge, dass mindestens stellenweise der direkte Kontakt zwischen der Tragmittelscheibe und dem Riemen verhindert wird, was die Traktionsfähigkeit zwischen einer Treibscheibe und dem Tragmittel stark reduziert. Andererseits kann eine starke und im Rillengrund verhärtete Verschmutzung die seitliche Führung des Tragmittels auf den Tragmittelscheiben beeinträchtigen und im Extremfall dazu führen, dass das Tragmittel gegenüber der Tragmittelscheibe seitlich verschoben wird oder gar die Lauffläche der Tragmittelscheibe verlässt. Sowohl der Verlust an Treibfähigkeit wie auch die seitliche Versetzung oder das Herabspringen des Tragmittels von der Tragmittelscheibe können zu schwerwiegenden Betriebsstörungen der Aufzugsanlage führen.
Ein weiterer Nachteil des in EP 1 555 234 A1 offenbarten Tragmittels ist darin zu sehen, dass das einwandfreie Zusammenwirken zwischen den keilförmigen Rippen und Rillen des Tragmittels und den korrespondierenden Rippen und Rillen der Tragmittelscheibe gestört wird, wenn das Tragmittel zusammen mit Tragmittelscheiben verwendet wird, die einen extrem kleinen Aussendurchmesser aufweisen. Der Grund dafür ist darin zu sehen, dass infolge der hohen Druckspannungen, die sich infolge der Tragmittelkrümmung im Bereich der Rippenkämme des Tragmittels ergeben, die Rippen sich so verformen, dass sie aus ihrer korrekten Lage in den keilförmigen Rillen der Tragmittelscheibe verdrängt werden. Wenn es sich bei der Tragmittelscheibe um eine Treibscheibe handelt, kann daraus eine Reduktion der Traktionsfähigkeit resultieren.

Aus US 5,308,291 ist ein Riementriebsystem bekannt, bei dem eine Tragmittelscheibe ein riemenartiges Tragmittel antreibt oder umlenkt. Das Tragmittel umfasst im Bereich einer der Tragmittelscheibe zugewandten Lauffläche mehrere in Längsrichtung des Tragmittels verlaufende Rippen und Rillen, welche einen keilförmigen Querschnitt mit schrägen Flanken aufweisen. Die Tragmittelscheibe umfasst im Bereich ihrer Peripherie mehrere in Umfangsrichtung verlaufende Rillen bzw. Rippen, welche ebenfalls einen keilförmigen Querschnitt mit schrägen Flanken aufweist und mit der Rippe bzw. der Rille des Tragmittels zusammenwirken, wobei jeweils zwischen einem Rippenkamm und einem korrespondierenden Rillengrund ein Hohlraum vorhanden ist, wenn das Tragmittel auf der Tragmittelscheibe aufliegt.

Beim Riementriebsystem gemäss US 5,308,291 entstehen solche Hohlräume durch Abflachen bzw. durch Abrunden der Rippenkämme, wobei diese Abflachungen bzw. die Durchmesser dieser Abrundungen grösser als die Durchmesser allenfalls vorhandenen Rundungen der jeweils korrespondierenden Rillengründe sind. Bei dieser Lösung hat jedoch betriebsbedingter Verschleiss an den Flanken der Rillen zur Folge, dass Absätze entstehen, auf denen sich die Rippen in radialer Richtung abstützen. Infolge dieser radialen Abstützung geht die zwecks Traktionserhöhung beabsichtigte Keilwirkung zu einem wesentlichen Teil verloren. Daraus resultiert eine reduzierte und ungleichförmige Traktionsfähigkeit in Verbindung mit erhöhtem Verschleiss.

Der vorliegenden Erfindung liegt die Aufgabe zugrunde, ein Tragmittelsystem der vorstehend beschriebenen Art zu schaffen, bei der die genannten Nachteile nicht vorhanden sind. Das Tragmittelsystem soll ausserdem kostengünstig und materialsparend sein.

Erfindungsgemäss wird diese Aufgabe durch die in den unabhängingen Patentansprüchen 1 und 11 angegebenen Massnahmen und Merkmale gelöst.

Die vorgeschlagene Lösung besteht also im Wesentlichen darin, dass bei einem Tragmittelsystem mit einem flachriemenartigen Tragmittel, das im Bereich einer der Treibscheibe zugewandten Lauffläche mindestens eine in Längsrichtung des Tragmittels verlaufende Rippe oder Rille umfasst, die mit einer in der Tragmittelscheibe vorhandenen korrespondierenden Rille oder Rippe zusammenwirkt, der Rippenkamm und/oder der Rillengrund beim Tragmittel bzw. bei der Tragmittelscheibe so gestaltet sind, dass zwischen dem Rippenkamm und dem korrespondierenden Rillengrund ein Hohlraum vorhanden ist, wenn das Tragmittel auf der Tragmittelscheibe aufliegt. Mit dieser Massnahme wird erreicht, dass kein Rippenkamm im korrespondierenden Rillengrund aufliegt, so dass die vorstehend erwähnten Radialkräfte nicht im Bereich des Rippenkamms und/oder des Rillengrundes, sondern über die schrägen Flanken der Rippe bzw. der Rille übertragen werden, dass Verschmutzungen in den Hohlraum abgeleitet werden können, wo sie keine schädlichen Wirkungen entfalten, und dass die Rippen des Tragmittels geringfügig in den Hohlraum expandieren können, wenn ihre durch die Tragmittelkrümmung verursachte innere Druckspannung eine gewisse Höhe erreicht hat.

Die gegen Verschmutzung besonders wirksame Erfindung besteht darin, dass zur Erzeugung des Hohlraums der Rillengrund der Rille der Tragmittelscheibe eine umlaufende Nut aufweist, d. h. dass der Rillengrund der keilförmigen Rille der Tragmittelscheibe durch eine umlaufende Nut vertieft ist.

Zweckmässigerweise weist die umlaufende Nut einen rechteckförmigen oder halbkreisförmigen Querschnitt auf.

Vorteilhafte Ausgestaltungen und Weiterbildungen der Erfindung gehen aus den unabhängigen Ansprüchen 2 bis 10 hervor.

Konstante und definierte Traktionswerte zwischen einer als Treibscheibe wirkenden Tragmittelscheibe und dem Tragmittel werden dadurch erreicht, dass bei auf der Tragmittelscheibe aufliegendem Tragmittel eine Rippe bzw. eine Rille des Tragmittels die korrespondierende Rille bzw. einer Rippe der Tragmittelscheibe ausschliesslich im Bereich ihrer schrägen Flanken berührt.

Eine besonders einfache Ausführungsform der Erfindung besteht darin, dass zur Erzeugung des Hohlraums der Rippenkamm der Rippe des Tragmittels und/oder der Rippe der Tragmittelscheibe abgeflacht ist.

Bei einer besonders verschleissresistenten Ausführungsform der Erfindung ist zur Erzeugung des Hohlraums der Rippenkamm der Rippe des Tragmittels und/oder der Rippenkamm der Rippe der Tragmittelscheibe mit einer Rundung versehen, wobei der Rundungsradius dieser Rundung grösser ist als der Rundungsradius einer allenfalls am Rillengrund der korrespondierenden Rille vorhandenen Rundung.

Gemäss einer besonders bevorzugten Ausführungsform der Erfindung weist das Tragmittel mehrere parallel angeordnete Rippen bzw. Rillen mit schrägen Flanken auf, die mit mehreren parallelen Rillen bzw. Rippen mit schrägen Flanken an der Tragmittelscheibe korrespondieren, wobei das unter Zugspannung auf der Tragmittelscheibe aufliegende Tragmittel diese ausschliesslich in den Bereichen der schrägen Flanken berührt.

Vorteilhafte Eigenschaften in Bezug auf Traktionsfähigkeit und seitliche Führung des Tragmittels auf der Tragmittelscheibe werden erreicht, wenn der zwischen den Flanken der Rippen und Rillen vorhandene Flankenwinkel (β) mindestens 60° und höchstens 120° beträgt.

Hervorragende Eigenschaften in Bezug auf geräuscharmen und vibrationsfreien Lauf des Tragmittels auf der Tragmittelscheibe werden erreicht, wenn bei einem Tragmittel mit mehreren Rippen und Rillen die Breiten der genannten Hohlräume so gewählt werden, dass die Summe der auf die Achse der Tragmittelscheibe projizierten Breiten aller berührenden Flanken der keilförmigen Rippen bzw. Rillen höchstens 70% der Gesamtbreite des Tragmittels beträgt.

Vorteilhafterweise wird die Tatsache, dass die Hohlräume im Bereich der Rillenkämme des Tragmittels eine Minimierung des für das Tragmittel zulässigen minimalen Krümmungsradius ermöglichen, so genutzt, dass die Tragmittelscheibe einen Aussendurchmesser von weniger als 80 mm, vorzugsweise von weniger als 65 mm aufweist.

Gemäss einer besonders materialsparenden und kostengünstigen Ausführungsform der Erfindung ist die als Treibscheibe dienende Tragmittelscheibe in die Abtriebswelle einer Antriebseinheit integriert oder in Form einer Tragmittel-Treibwelle mit der Abtriebswelle gekoppelt. In beiden Fällen hat die Treibscheibe die Form einer mit mindestens einer Rippe oder Rille versehenen Welle, die einen minimalen Aussendurchmesser aufweisen kann, weil dank der erfindungsgemässen Hohlräume zwischen korrespondierenden Rippenkämmen und Rillengründen die in den Rippenkämmen infolge der geringen Tragmittelkrümmung auftretende Druckspannung abgebaut und dadurch das Auftreten von Schlupf reduziert wird.

Ausführungsbeispiele der Erfindung sind anhand der beigefügten Zeichnungen erläutert.

Es zeigen:
- Fig. 1: einen Schnitt durch eine erfindungsgemässe Aufzugs- anlage mit einem erfindungsgemässen Tragmittel.
- Fig. 2: eine isometrische Ansicht eines Tragmittels mit mehreren Rippen und Rillen gemäss dem bekannten Stand der Technik.
- Fig. 3: einen Schnitt durch eine erste Ausführungsform eines Tragmittels gemäss dem bekannten Stand der Technik.
- Fig. 4: einen Schnitt durch eine zweite Ausführungsform eines Tragmittels gemäss dem bekannten Stand der Technik.
- Fig. 5: einen Schnitt durch eine erfindungsgemässe Ausführungsform eines Tragmittels.
- Fig. 6: einen Schnitt durch die Peripherie einer erfin- dungsgemässen Tragmittelscheibe für das erfindungs- gemässe Tragmittel.
- Fig. 7: einen Schnitt durch eine erfindungsgemässe Riemen scheibe und ein darauf aufliegendes erfindungsge- mässes Tragmittel.
- Fig. 8: einen vergrösserten Ausschnitt aus Fig. 7

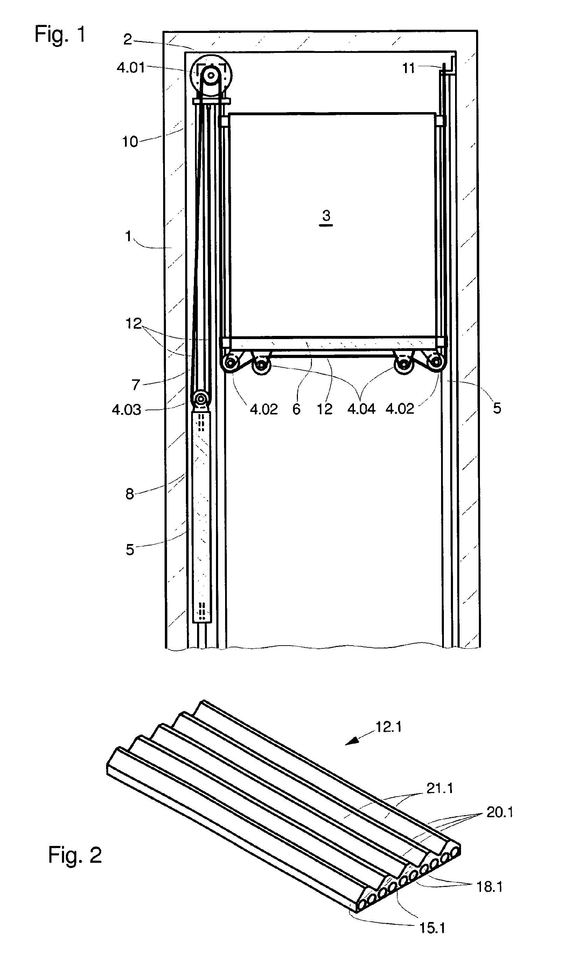

**Fig. 1** zeigt einen Schnitt durch ein in einem Aufzugsschacht 1 installiertes erfindungsgemässes Aufzugssystem mit einem erfindungsgemässen Tragmittel.
Dargestellt sind im Wesentlichen:
- eine im Aufzugsschacht 1 fixierte Antriebseinheit 2 mit einer Treibscheibe 4.01
- eine an Kabinenführungsschienen 5 geführte Aufzugskabine 3 mit unterhalb des Kabinenbodens 6 angebrachten Kabinentragscheiben 4.02
- ein an Gegengewichtsführungsschienen 7 geführtes Gegengewicht 8 mit einer Gegengewichtstragscheibe 4.03
- ein riemenartiges Tragmittel 12 mit mindestens einer in seiner Längsrichtung verlaufenden Rippe oder Rille, welches Tragmittel die Aufzugskabine 3 und das Gegengewicht 8 trägt und die Antriebskraft von der Treibscheibe 4.01 auf diese überträgt.
   (Bei einer realen Aufzugsanlage sind mindestens zwei parallel angeordnete Tragmittel vorhanden)

Das riemenartige Tragmittel 12 ist an einem seiner Enden unterhalb der Treibscheibe 4.01 an einem ersten Tragmittelfixpunkt 10 befestigt. Von diesem aus erstreckt er sich abwärts bis zu der Gegengewichtstragscheibe 4.03, umschlingt diese und erstreckt sich von dieser aus zur Treibscheibe 4.01, umschlingt diese und verläuft entlang der gegengewichtsseitigen Kabinenwand abwärts, umschlingt auf beiden Seiten der Aufzugskabine je eine unterhalb der Aufzugskabine 3 angebrachte Kabinentragscheibe 4.02 um je 90° und verläuft entlang der dem Gegengewicht 8 abgewandten Kabinenwand aufwärts zu einem zweiten Tragmittelfixpunkt 11.

Die Ebene der Treibscheibe 4.01 ist rechtwinklig zur gegengewichtsseitigen Kabinenwand angeordnet und ihre Vertikalprojektion liegt ausserhalb der Vertikalprojektion der Aufzugskabine 3. Es ist daher wichtig, dass die Treibscheibe 4.01 einen geringen Durchmesser aufweist, damit der Abstand zwischen der linksseitigen Kabinenwand und der dieser gegenüber liegenden Wand des Aufzugsschachts 1 möglichst klein sein kann. Ausserdem ermöglicht ein geringer Treibscheibendurchmesser die Verwendung eines getriebelosen Antriebsmotors mit relativ geringem Antriebsdrehmoment als Antriebseinheit 2.

Die Treibscheibe 4.01 und die Gegengewichtstragscheibe 4.03 sind an ihrer Peripherie mit Rillen versehen, die komplementär zu den Rippen des Tragmittels 12 geformt sind. Wo das Tragmittel 12 eine der Tragmittelscheiben 4.01 und 4.03 umschlingt, liegen seine Rippen in korrespondierenden Rillen der Tragmittelscheibe, wodurch eine perfekte Führung des Tragmittels auf diesen Tragmittelscheiben gewährleistet ist. Ausserdem wird durch eine zwischen den Rillen der als Treibscheibe dienenden Tragmittelscheibe 4.01 und den Rippen des Tragmittels 12 entstehende Keilwirkung die Traktionsfähigkeit verbessert.

Bei der Tragmittel-Unterschlingung unterhalb der Aufzugskabine 3 ist keine seitliche Führung zwischen den Kabinentragscheiben 4.02 und dem Tragmittel 12 gegeben, da die Rippen des Tragmittels sich auf seiner von den Kabinentragscheiben 4.02 abgewandten Seite befinden. Um die Seitenführung des Tragmittels dennoch zu gewährleisten, sind am Kabinenboden 6 zwei mit Rillen versehene Führungsscheiben 4.04 angebracht, deren Rillen mit den Rippen des Tragmittels 12 als Seitenführung zusammenwirken.

Fig. 2 zeigt einen Abschnitt eines als Tragmittel dienenden Keilrippenriemens 12.1 einer Aufzugsanlage gemäss dem vorstehend angegebenen Dokument zum Stand der Technik. Zu erkennen sind der Riemenkörper 15.1, mehrere keilförmige Rippen 20.1 und Rillen 21.1, sowie die im Riemenkörper eingebetteten Zugträger 18.1.

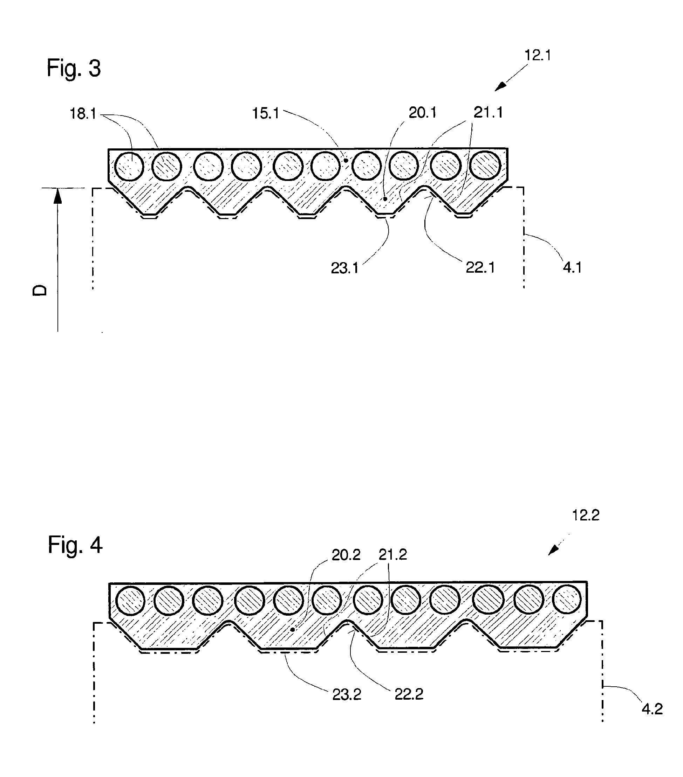

Fig. 3 zeigt einen Querschnitt durch ein erstes Tragmittel 12.1, wie dieses aus dem genannten Dokument zum Stand der Technik bekannt ist. Es umfasst einen Riemenkörper 15.1 und mehrere darin eingebettete Zugträger 18.1. Der Riemenkörper 15.1 ist aus einem elastischen Material hergestellt. Verwendbar sind beispielsweise Naturgummi oder eine Vielzahl von synthetischen Elastomeren. Die Flachseite des Riemenkörpers 15.1 kann mit einer zusätzlichen Deckschicht oder einer eingearbeiteten Gewebeschicht versehen sein. Die mit einer Treibscheibe und gegebenenfalls mit Umlenkscheiben - beide im Folgenden als Tragmittelscheiben bezeichnet - zusammenwirkende Traktionsseite des Riemenkörpers 15.1 weist mehrere keilförmige Rippen 20.1 und Rillen 21.1 auf, die sich in Längsrichtung des Tragmittels 12.1 erstrecken. Mittels Phantomlinien ist eine Tragmittelscheibe 4.1 angedeutet, in deren Peripherie mit dem Aussendurchmesser D zu den Rippen 20.1 und Rillen 21.1 des Tragmittels 12.1 korrespondierende Rillen 23.1 und Rippen 22.1 eingearbeitet sind.

Fig. 4 zeigt einen Querschnitt durch ein zweites, ebenfalls aus dem genannten Dokument zum Stand der Technik bekanntes Tragmittel 12.2, bei welchem die keilförmigen Rippen breiter als die Rillen ausgeführt sind. Der prinzipielle Aufbau und die Funktion dieses Tragmittels entsprechen jedoch denjenigen des in Fig. 3 gezeigten Tragmittels. Auch in Fig. 4 ist mittels Phantomlinien die Aussenkontur einer Tragmittelscheibe 4.2 mit zu den Rippen 20.2 und Rillen 21.2 des Tragmittels 12.2 korrespondierenden Rillen 23.2 und Rippen 22.2 dargestellt.

Aus den Fig. 3 und 4 ist klar erkennbar, dass bei beiden Ausführungsformen gemäss dem bekannten Stand der Technik die Rillen 23.1; 23.2 und Rippen 22.1; 22.2 der Tragmittelscheiben 4.1, 4.2 vollständig komplementär zu den korrespondierenden Rippen 20.1; 20.2 und Rillen 21.1; 21.2 der Tragmittel 12.1, 12.2 ausgebildet sind. Dies hat zur Folge, dass im Betrieb das Tragmittel die Tragmittelscheibe entlang der gesamten Querschnittskontur berührt, die durch die Rippen und Rillen des Tragmittels und der Tragmittelscheibe gebildet wird, was die eingangs und im Folgenden beschriebenen Nachteile zur Folge hat.

Wie allgemein bekannt ist, kann eine als Treibscheibe verwendete Tragmittelscheibe dadurch Traktionskräfte auf ein Tragmittel übertragen, dass das Tragmittel radial gegen die Peripherie der Treibscheibe gepresst wird, wobei die erzielbare Traktionskraft dem Produkt aus der Summe der zwischen der Treibscheibe und dem Tragmittel auftretenden Normalkräfte und dem vorhandenen Reibungskoeffizient entspricht.
Im Bereich der schrägen Flanken der Rippen 20.1, 22.1; 20.2, 22.2, bzw. Rillen 21.1, 23.1; 21.2, 23.2 übertragene Radialkraftanteile werden durch die Keilwirkung zwischen den Flanken zu höheren, auf die Flanken wirkenden Normalkräften verstärkt, welche höhere Traktionskräfte erzeugen können, als Radialkraftanteile die im Wesentlichen in radialer Richtung übertragen werden. Da bei vollständig komplementär ausgebildeten korrespondierenden Rippen und Rillen des Tragmittels und der Tragmittelscheibe nicht klar bestimmt ist, welcher Anteil der zwischen dem Tragmittel und der Tragmittelscheibe auftretenden Radialkräfte im Bereich der schrägen Flanken der Rippen und Rillen, und welcher Anteil in annähernd radialer Richtung im Bereich der Rippenkämme und Rillengründe übertragen wird, ist im Falle einer als Treibscheibe dienenden Tragmittelscheibe die resultierende Traktionskraft einerseits nicht ausreichend genau im Voraus bestimmbar und andererseits infolge von plastischen Formänderungen und Abrieb am Tragmittel nicht über eine längere Betriebsdauer konstant.

Aus Fig. 3 und 4 ist ausserdem leicht erkennbar, dass sich in den Rillen der Tragmittelscheibe 4.1; 4.2 wie auch in den Rillen des Tragmittels 12.1; 12.2 Schmutz und Abrieb ansammeln kann, der durch das gespannte Tragmittel verdichtet und verhärtet wird. Dadurch können die Traktionsfähigkeit wie auch die seitliche Führung zwischen der Tragmittelscheibe und dem Tragmittel stark beeinträchtigt werden, was schwerwiegende Betriebsstörungen zur Folge haben kann.

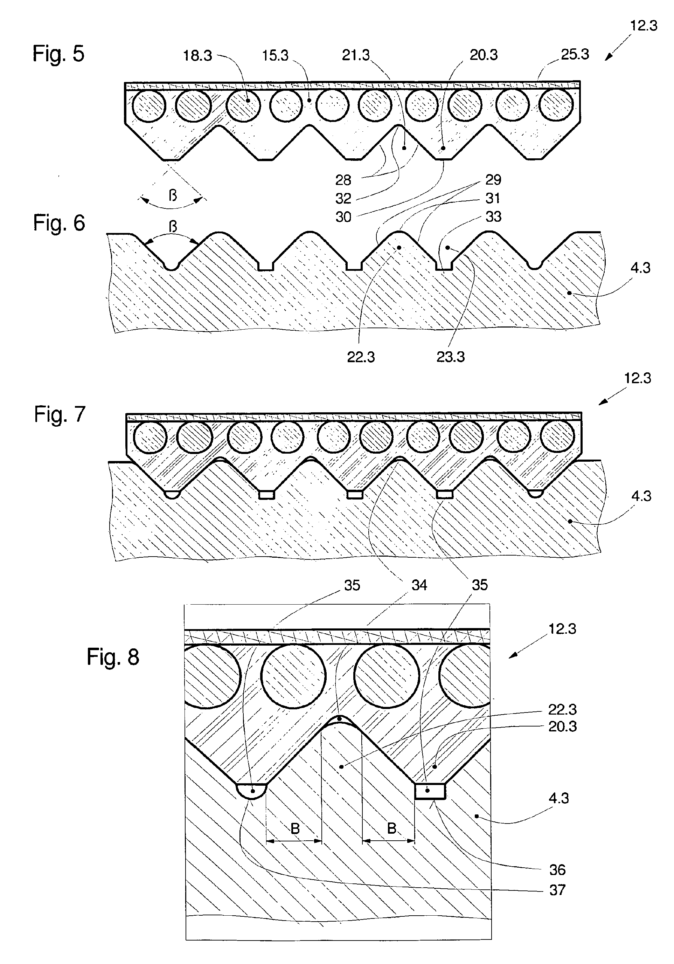

In Fig. 5 ist ein Schnitt durch ein erfindungsgemässes Tragmittel 12.3, und in Fig. 6 ist die korrespondierende Peripherie einer erfindungsgemässen Tragmittelscheibe 4.3 dargestellt. Fig. 7 zeigt einen Schnitt durch das Tragmittel 12.3 gemäss Fig. 5 und die Tragmittelscheibe 4.3 gemäss Fig. 6 in einem Zustand, in welchem das Tragmittel infolge seiner Zugbelastung gegen die Tragmittelscheibe gepresst wird. Fig. 8 zeigt einen vergrösserten Ausschnitt aus Fig. 7, um Details erkennbar zu machen.

Das in den Fig. 5 - 8 dargestellte Tragmittel 12.3 umfasst einen Riemenkörper 15.3 und mehrere darin eingebettete Zugträger 18.3. Der Riemenkörper 15.3 ist aus einem elastischen Material hergestellt. Verwendbar sind beispielsweise Naturgummi oder eine Vielzahl von synthetischen Elastomeren.

Die Flachseite 17 des Riemenkörpers 15.1 kann mit einer zusätzlichen Deckschicht 25.3, vorzugsweise einer Gewebeschicht, versehen sein. Das Tragmittel 12.3 weist mehrere sich in seiner Längsrichtung erstreckende Rippen und Rillen auf, die einerseits der seitlichen Führung des Tragmittels auf einer Tragmittelscheibe 4.3 dienen und andererseits die Traktionsfähigkeit zwischen der Tragmittelscheibe und dem Tragmittel verbessern, wenn die Tragmittelscheibe als Treibscheibe verwendet wird.

Den Fig. 5 bis 8 ist zu entnehmen, dass die Rillen 23.3 und Rippen 22.3 der Tragmittelscheibe nicht vollständig komplementär zu den korrespondierenden Rippen 20.3 und Rillen 21.3 des Tragmittels ausgebildet sind. In den Bereichen, in welchen die Rippenkämme 30; 31 den Rillengründen 32; 33 gegenüberliegen, sind Hohlräume 34, 35 vorhanden, so dass gewährleistet ist, dass bei auf der Tragmittelscheibe 4.3 aufliegendem Tragmittel 12.3 die Rippen (20.3) bzw. Rillen (21.3) des Tragmittels (12.3) und die korrespondierenden Rillen (23.3) bzw. die korrespondierenden Rippen (22.3) der Tragmittelscheibe 4.3 sich ausschliesslich im Bereich ihrer schrägen Flanken (28; 29) berühren. Die zwischen dem Tragmittel 12.3 und der Tragmittelscheibe 4.3 wirkenden Radialkräfte werden durch diese Massnahmen mit Sicherheit ausschliesslich über die schrägen Flanken 28; 29 der Rippen und Rillen übertragen, die einen konstanten und einheitlichen Flankenwinkel β aufweisen. Es ist daher gewährleistet, dass sämtliche zwischen dem Tragmittel und der Tragmittelscheibe auftretenden Radialkraftanteile infolge der durch die schrägen Flanken verursachten Keilwirkung zu erhöhten Normalkräften zwischen den Flanken des Tragmittels und der Tragmittelscheibe verstärkt werden. Bei einer als Treibscheibe dienenden Tragmittelscheibe 4.3 resultiert daraus - wie bereits vorstehend beschrieben - eine erhöhte und über eine lange Betriebszeit konstante Traktionsfähigkeit.

Die genannten Hohlräume 34, 35 haben aber auch den Zweck, Verschmutzungen aufzunehmen, die sich im Verlauf des Aufzugsbetriebs auf der Traktionsflächen des Tragmittels 12.3 und der Tragmittelscheibe 4.3 niederschlagen. Dadurch wird erreicht, dass bei Verwendung der Tragmittelscheibe als Treibscheibe die Traktionsfähigkeit nicht beeinträchtigt wird, und dass bei allen Tragmittelscheiben die durch das Zusammenwirken von Rippen und Rillen des Tragmittels und der Tragmittelscheibe gegebene seitliche Führung des Tragmittels auf den Tragmittelscheiben erhalten bleibt. Die Hohlräume 34, 35 können anlässlich der periodisch durchzuführenden Aufzugswartung gereinigt werden.

Wie in Fig. 5 bis 8 gezeigt, können die im Bereich von einander gegenüberliegenden Rippenkämmen (30; 31) und Rillengründen (32; 33) erfindungsgemäss erforderlichen Hohlräume (34, 35) auf unterschiedliche Weise erzeugt werden. Im Interesse einer vereinfachten Darstellung sind in den Fig. 6 bis 8 unterschiedliche Ausführungsformen der Massnahmen zur Erzeugung von Hohlräumen an demselben Tragmittel und derselben Tragmittelscheibe gezeigt.

Bei einer besonders einfachen Ausführungsform werden zu diesem Zweck die Rippenkämme 30 des Tragmittels 12.3 oder die Rippenkämme 31 der Tragmittelscheibe 4.3 abgeflacht.

Gemäss einer weiteren Ausführungsform, die insbesondere aus Fig. 8 erkennbar ist, werden Hohlräume 34 dadurch erzeugt, dass die Rippenkämme 30 der Rippen 20.3 des Tragmittels 12.3 oder die Rippenkämme 31 der Rippen 22.3 der Tragmittelscheibe 4.3 mit einer Rundung versehen werden, wobei der Rundungsradius dieser Rundung erheblich grösser ist als der Rundungsradius einer allenfalls am Rillengrund der korrespondierenden Rille vorhandenen Rundung. Es können auch sowohl die Rippenkämme des Tragmittels als auch der Tragmittelscheibe mit solchen Rundungen versehen werden. Die Ausführungsformen mit stark gerundeteten Rippenkämmen haben sich als besonders verschleissarm erwiesen und zeichnen sich durch gute Laufruhe aus.

Bei einer zur Behebung des Verschmutzungsproblems besonders geeigneten Ausführungsform der Erfindung sind die Rillengründe 33 der keilförmigen Rillen 23.3 der Tragmittelscheibe 4.3 durch umlaufende Nuten 36, 37 in der Tragmittelscheibe vertieft, wie dies insbesondere aus Fig. 8 zu erkennen ist. Solche Nuten haben den Vorteil, dass sie eine erhebliche Menge von Schmutz aufnehmen können. Vorteilhafterweise haben diese Nuten 36, 37 rechteckige oder halbrunde Querschnitte.

In Fig. 8 sind mit B die auf die Achse der Tragmittelscheibe projizierten Breiten der schrägen Berührungsflächen zwischen dem Tragmittel 12.3 und der Tragmittelscheibe 4.3 bezeichnet. Versuche haben ergeben, dass es vorteilhaft ist, die Summe der auf die Achse der Tragmittelscheibe (4.3) projizierten Breiten (B) aller berührenden Flanken der Rippen bzw. Rillen auf höchstens 70% der Gesamtbreite des Tragmittels (12.3) zu beschränken. Damit wird einerseits erreicht, dass jederzeit sämtliche Berührungsflächen des Tragmittels in sattem Kontakt mit den korrespondierenden Berührungsflächen der Tragmittelscheibe stehen, wodurch ein optimal stabiler, vibrations- und geräuscharmer Lauf des Tragmittels 12.3 erreicht wird. Durch die Limitierung der projizierten Gesamtbreite der Berührungsflächen wird ausserdem eine ausreichende Flächenpressung im Bereich der Berührungsflächen gewährleistet. Dies hat im Fall einer Treibscheibe eine geringere negative Beeinflussung des Traktionsverhaltens durch Verschmutzungen wie Öl, Russ, Staubkörner, etc. zur Folge, da die Verschmutzungskomponenten durch die hohe Flächenpressung entweder aus dem Berührungsbereich (vorzugsweise in die erwähnten Hohlräume) verdrängt oder - beispielsweise im Fall von relativ groben Staubkörnern - durch die Treibscheibe in das elastische Material des Tragmittels 12.3 eingedrückt werden, so dass der Kontakt zwischen dem Tragmittel und der Treibscheibe 4.3 bestmöglich erhalten bleibt.

Die Limitierung der genannten projizierten Gesamtbreite der Berührungsflächen erfolgt vorzugsweise durch die Wahl der Breite der erfindungsgemässen Hohlräume 34, 35 zwischen korrespondierenden Rippenkämmen und Rillengründen.

Die erfindungsgemässen Hohlräume 34, 35 zwischen korrespondierenden Rippenkämmen und Rillengründen haben eine weitere vorteilhafte Wirkung. Im Fall einer starken Tragmittelkrümmung sind die Rippen 20.3 des Tragmittels 12.3 im Bereich der Rippenkämme 30 hohen Druckspannungen ausgesetzt, die dazu führen, dass die Rippen im genannten Bereich ausbauchen. Dies hat zur Folge, dass die Rippen und das Tragmittel infolge der Keilwirkung zwischen den schrägen Flanken gegenüber der Tragmittelscheibe 4.3 angehoben werden, wodurch die satte Berührung zwischen den Rippen und Rillen des Tragmittels und den Rippen und Rillen der Tragmittelscheibe verloren geht. Daraus resultieren erhöhter Schlupf zwischen einer als Treibscheibe verwendeten Tragmittelscheibe und dem Tragmittel, hoher Tragmittelverschleiss sowie unruhiger Lauf des Tragmittels im Bereich aller Tragmittelscheiben.

Die vorstehend genannten Hohlräume 34, 35 ermöglichen es den Rippen des Tragmittels, sich im Bereich ihrer Rippenkämme in diese Hohlräume etwas auszudehnen, wodurch das beschriebene Problem mit den geringen Krümmungsradien weitgehend entschärft wird. Diese Massnahme trägt wesentlich dazu bei, dass das erfindungsgemässe Tragmittel in Kombination mit Tragmittelscheiben mit extrem geringen Aussendurchmessern eingesetzt werden kann. Konkret können Tragmittelscheiben als Treib- und Umlenkscheiben verwendet werden, deren Aussendurchmesser im Normalfall kleiner als 80 mm ist, wenn erforderlich aber auch kleiner als 65 mm sein kann. Dies ermöglicht es, die Treibscheibe in die Abtriebswelle einer Antriebseinheit zu integrieren oder in der Form einer Tragmittel-Antriebswelle in mit der Abtriebswelle der Antriebseinheit zu koppeln.

Bei der in den Fig. 5 - 8 gezeigten Ausführungsform der Erfindung weist das Tragmittel 12.3 mehrere parallele Rippen und Rillen auf, die über die gesamte Breite des Tragmittels verteilt angeordnet sind. Ein erfindungsgemässes Tragmittel kann jedoch auch mit nur einer einzigen Rippe oder Rille versehen sein, was selbstverständlich auch für die korrespondierende Tragmittelscheibe gilt. Vorteilhafterweise ist eine solche Rippe oder Rille beim Tragmittel in der Mitte der Tragmittelbreite angeordnet, wobei die Breite der Rippe bzw. der Rille grösser ist, und eine ähnliche Form aufweist, wie die Rippen 20.2 des in Fig. 4 dargestellten Tragmittels.

Das in den Fig. 5 bis 8 dargestellte Tragmittel weist einen bevorzugten Flankenwinkel β von etwa 90° auf. Versuche haben ergeben, dass der Flankenwinkel β einen entscheidenden Einfluss auf die Geräuschentwicklung und die Entstehung von Vibrationen im Tragmittel hat, und dass für ein Aufzugs-Tragmittel Flankenwinkel β von 80° bis 100° optimal sind. Bei Flankenwinkeln β von weniger als 60° neigt das Tragmittel zu Vibrationen und bei Flankenwinkeln β von mehr als 100° ist die Sicherheit gegen seitliches Verschieben des Tragmittels auf der Tragmittelscheibe nicht mehr gewährleistet.

Das erfindungsgemässe Tragmittelsystem ist vorstehend im Zusammenhang mit einer Anwendung in einer Aufzugsanlage im Sinne eines Beispiels und nicht im Sinne einer Einschränkung beschrieben. Der Fachmann wird in Kenntnis der Erfindung weitere Anwendungs- und Ausführungsvarianten erkennen, die im Schutzbereich der Patentansprüche liegen.

## Patentansprüche

1. Tragmittelsystem, bei dem eine Tragmittelscheibe (4.01, 4.02, 4.03; 4.3) ein riemenartiges Tragmittel (12.3) antreibt oder umlenkt, wobei
- das Tragmittel (12.3) im Bereich einer der Tragmittelscheibe (4.3) zugewandten Lauffläche mindestens eine in Längsrichtung des Tragmittels (12.3) verlaufende Rippe (20.3) oder Rille (21.3) umfasst , welche einen keilförmigen Querschnitt mit schrägen Flanken (28) aufweist,
- die Tragmittelscheibe (4.3) im Bereich ihrer Peripherie mindestens eine korrespondierende, in Umfangsrichtung verlaufende Rille (23.3) bzw. eine Rippe (22.3) umfasst, welche ebenfalls einen keilförmigen Querschnitt mit schrägen Flanken (29) aufweist und mit der Rippe (20.3) bzw. der Rille (21.3) des Tragmittels (12.3) zusammenwirkt,
- zwischen einem Rippenkamm (30, 31)und einem korrespondierenden Rillengrund (32, 33) ein Hohlraum (34, 35) vorhanden ist, wenn das Tragmittel (12.3) auf der Tragmittelscheibe (4.3) aufliegt,
**dadurch gekennzeichnet, dass**
zur Erzeugung eines Hohlraums (35) der Rillengrund (33) der Rille (23.3) der Tragmittelscheibe (4.3) eine umlaufende Nut (36, 37) aufweist und das Tragmittel (12.3) eine Aufzugkabine (3) eines Aufzugssystems trägt.

2. Tragmittelsystem nach Anspruch 1, **dadurch gekennzeichnet, dass** die umlaufende Nut (36, 37) einen rechteckförmigen oder halbkreisförmigen Querschnitt aufweist.

3. Tragmittelsystem nach Anspruch 1 oder 2, **dadurch gekennzeichnet, dass** bei auf der Tragmittelscheibe 4.3 aufliegendem Tragmittel 12.3 die mindestens eine Rippe (20.3) bzw. Rille (21.3) des Tragmittels (12.3) und die korrespondierende Rille (23.3) bzw. die korrespondierende Rippe (22.3) der Tragmittelscheibe 4.3 sich ausschliesslich im Bereich ihrer schrägen Flanken (28; 29) berühren.

4. Tragmittelsystem nach einem der Ansprüche 1 - 3, **dadurch gekennzeichnet, dass** zur Erzeugung eines Hohlraums der Rippenkamm (31) der Rippe (22.3) der Tragmittelscheibe (4.3) abgeflacht ist.

5. Tragmittelsystem nach einem der Ansprüche 1 - 4, **dadurch gekennzeichnet, dass** zur Erzeugung eines Hohlraums der Rippenkamm (31) der Rippe (22.3) der Tragmittelscheibe (4.3) mit einer Rundung versehen ist, wobei der Rundungsradius dieser Rundung grösser ist als der Rundungsradius einer allenfalls am Rillengrund (33; 32) der korrespondierenden Rille (21.3) des Tragmittels (12.3) vorhandenen Rundung.

6. Tragmittelsystem nach einem der Ansprüche 1 - 5, **dadurch gekennzeichnet, dass** das Tragmittel (12.3) mehrere parallel angeordnete Rippen (20.3) bzw. Rillen (21.3) mit schrägen Flanken (28) aufweist, die mit mehreren parallelen Rillen (23.3) bzw. Rippen (22.3) mit schrägen Flanken (29) an der Peripherie der Tragmittelscheibe (4.3) korrespondieren, wobei sich das unter Zugspannung auf der Tragmittelscheibe (4.3) aufliegende Tragmittel (12.3) und die Tragmittelscheibe (4.3) ausschliesslich im Bereich der genannten schrägen Flanken (28; 29) berühren.

7. Tragmittelsystem nach einem der Ansprüche 1 - 6, **dadurch gekennzeichnet, dass** der zwischen den Flanken (28; 29) der Rippen und Rillen vorhandene Flankenwinkel (β) mindestens 60° und höchstens 120° beträgt.

8. Tragmittelsystem nach einem der Ansprüche 1 - 7, **dadurch gekennzeichnet, dass** die genannten Hohlräume (34, 35) so gestaltet sind, dass die Summe der auf die Achse der Tragmittelscheibe (4.3) projizierten Breiten (B) aller berührenden Flanken höchstens 70% der Gesamtbreite des Tragmittels (12.3) beträgt.

9. Tragmittelsystem nach einem der Ansprüche 1 - 8, **dadurch gekennzeichnet, dass** die Tragmittelscheibe (4.3) einen Aussendurchmesser von weniger als 80 mm, vorzugsweise von weniger als 65 mm aufweist.

10. Tragmittelsystem nach einem der Ansprüche 1 - 9, **dadurch gekennzeichnet, dass** eine als Treibscheibe verwendete Tragmittelscheibe (4.3) in eine Abtriebswelle einer Antriebseinheit (2) integriert ist oder in Form einer Treibwelle mit der Abtriebswelle gekoppelt ist.

11. Aufzugsanlage mit einem mindestens eine Aufzugskabine tragenden und antreibenden Tragmittelsystem gemäss einem der Patentansprüche 1 - 10.

## Claims

1. Support means system, in which a support means pulley (4.01, 4.02, 4.03; 4.3) drives or deflects a belt-like support means (12; 12.3), wherein
- the support means (12.3) has in the region of a running surface facing the support means pulley (4.3) at least one rib (20.3) or groove (21.3) which extends in the longitudinal direction of the support means (12.3) and which has a wedge-shaped cross-section with inclined flanks (28),
- the support means pulley (4.3) has in the region of its periphery at least one corresponding groove (23.3) or rib (22.3) which extends in circumferential direction and which similarly has a wedge-shaped cross-section with inclined flanks (29) and co-operates with the rib (20.3) or the groove (21.3) of the support means (12.3), and
- a cavity (34, 35) is present between a rib crest (30, 31) and a corresponding groove base (32, 33) when the support means (12.3) rests on the support means pulley (4.3),
**characterised in that** the groove base (33) of the groove (23.3) of the support means pulley (4.3) has an encircling slot (36, 37) in order to produce the cavity (35) and the support means (12.3) supports a lift cage (3) of a lift system.

2. Support means system according to claim 1, **characterised in that** the encircling slot (36, 37) has a rectangular or semicircular cross-section.

3. Support means system according to claim 1 or claim 2, **characterised in that** when the support means (12.3) rests on the support means pulley (4.3) the at least one rib (20.3) or groove (21.3) of the support means (12.3) and the corresponding groove (23.3) or the corresponding rib (22.3) of the support means (4.3) contact one another exclusively in the region of the inclined flanks (28; 29) thereof.

4. Support means system according to any one of claims 1 to 3, **characterised in that** the rib crest (31) of the rib (22.3) of the support means pulley (4.3) is flattened in order to produce a cavity.

5. Support means system according to any one of claims 1 to 4, **characterised in that** the rib crest (31) of the rib (22.3) of the support means pulley (4.3) is provided with a rounding in order to produce a cavity, wherein the rounding radius of this rounding is greater than the rounding radius of any rounding present at the groove base (33; 32) of the corresponding groove (21.3) of the support areas (12.3).

6. Support means system according to any one of claims 1 to 5, **characterised in that** the support means (12.3) has several parallelly arranged ribs (20.3) or grooves (21.3) with inclined flanks (28), which correspond with several parallel grooves (23.3) or ribs (22.3) with inclined flanks (29) at the periphery of the support means pulley (4.3), wherein the support means (12.3) resting under tensile stress on the support means pulley (4.3) and the support means pulley (4.3) contact one another exclusively in the region of the said inclined flanks (28; 29).

7. Support means system according to any one of claims 1 to 6, **characterised in that** the flank angle β present between the flanks (28; 29) of the ribs and grooves is at least 60° and at most 120°.

8. Support means system according to any one of claims 1 to 7, **characterised in that** the said cavities (34, 35) are so shaped that the sum of the widths (B), which are projected onto the axis of the support means pulley (4.3), of all contacting flanks is at most 70% of the total width of the support means (12.3).

9. Support means system according to any one of claims 1 to 8, **characterised in that** the support means pulley (4.3) has an outer diameter of less of than 80 millimetres, preferably of less than 65 millimetres.

10. Support means system according to any one of claims 1 to 9, **characterised in that** a support means pulley (4.3) used as a drive pulley is integrated in a drive output shaft of a drive unit (2) or is coupled, in the form of a drive shaft, with the driven shaft.

11. Lift installation with a support means system according to any one of claims 1 to 10 supporting and driving at least one lift cage.

## Revendications

1. Système de moyen porteur dans lequel une poulie pour moyen porteur (4.01, 4.02, 4.03 ; 4.3) entraîne ou dévie un moyen porteur en forme de courroie (12.3), étant précisé
- que le moyen porteur (12.3) comprend, dans la zone d'une surface de roulement tournée vers ladite poulie (4.3), au moins une nervure (20.3) ou une gorge (21.3) qui s'étend dans le sens longitudinal du moyen porteur (12.3) et qui présente une section transversale cunéiforme avec des flancs inclinés (28),
- que la poulie pour moyen porteur (4.3) comprend, dans la zone de sa périphérie, au moins une gorge (23.3) ou une nervure (22.3) correspondantes qui s'étend dans le sens circonférentiel, qui présente elle aussi une section transversale cunéiforme avec des flancs inclinés (29) et qui coopère avec la nervure (20.3) ou la gorge (21.3) du moyen porteur (12.3), et
- qu'il est prévu entre une arête de nervure (30, 31) et un fond de gorge correspondant (32, 33) une cavité (34, 35) quand le moyen porteur (12.3) est posé sur la poulie pour moyen porteur (4.3),
**caractérisé en ce que** pour produire une cavité (35), le fond (33) de la gorge (23.3) de la poulie pour moyen porteur (4.3) présente une rainure circonférentielle (36, 37), et le moyen porteur (12.3) porte une cabine (3) d'un système d'ascenseur.

2. Système de moyen porteur selon la revendication 1, **caractérisé en ce que** la rainure circonférentielle (36, 37) présente une section transversale rectangulaire ou semi-circulaire.

3. Système de moyen porteur selon la revendication 1 ou 2, **caractérisé en ce que** lorsque le moyen porteur (12.3) est posé sur la poulie pour moyen porteur (4.3), la ou les nervures (20.3) et gorges (21.3) du moyen porteur (12.3) et la gorge correspondante (23.3) ou la nervure (22.3) correspondante de ladite poulie (4.3) se touchent uniquement dans la zone de leurs flancs inclinés (28 ; 29).

4. Système de moyen porteur selon l'une des revendications 1 à 3, **caractérisé en ce que** pour produire une cavité, la crête (31) de la nervure (22.3) de la poulie pour moyen porteur (4.3) est aplatie.

5. Système de moyen porteur selon l'une des revendications 1 à 4, **caractérisé en ce que** pour produire une cavité, l'arête (31) de la nervure (22.3) de la poulie pour moyen porteur (4.3) est pourvue d'une partie arrondie, le rayon de cette partie arrondie étant plus grand que le rayon d'une partie arrondie éventuellement prévue dans le fond (33 ; 32) de la rainure (21.3) correspondante du moyen porteur (12.3).

6. Système de moyen porteur selon l'une des revendications 1 à 5, **caractérisé en ce que** le moyen porteur (12.3) présente plusieurs nervures (20.3) et gorges (21.3) parallèles, pourvues de flancs inclinés (28), qui correspondent à plusieurs gorges (23.3) et nervures (22.3) parallèles, pourvues de flancs inclinés (29), prévues sur la périphérie de la poulie pour moyen porteur (4.3), étant précisé que le moyen porteur (12.3), quand il est posé sur la poulie (4.3) en étant soumis à une contrainte de traction, et ladite poulie (4.3) se touchent uniquement dans la zone des flancs inclinés (28 ; 29).

7. Système de moyen porteur selon l'une des revendications 1 à 6, **caractérisé en ce que** l'angle de flancs (β) défini entre les flancs (28 ; 29) des nervures et des gorges est au minimum de 60° et au maximum de 120°.

8. Système de moyen porteur selon l'une des revendications 1 à 7, **caractérisé en ce que** lesdites cavités (34, 35) sont conçues de telle sorte que la somme des largeurs (B) de tous les flancs qui se touchent, projetées sur l'axe de la poulie pour moyen porteur (4.3), représente au maximum 70% de la largeur totale du moyen porteur (12.3).

9. Système de moyen porteur selon l'une des revendications 1 à 8, **caractérisé en ce que** la poulie pour moyen porteur (4.3) présente un diamètre extérieur de moins de 80 mm, de préférence de moins de 65 mm.

10. Système de moyen porteur selon l'une des revendications 1 à 9, **caractérisé en ce qu'**une poulie pour moyen porteur (4.3) utilisée comme poulie d'entraînement est intégrée dans un arbre de sortie d'une unité d'entraînement (2) ou est couplée, sous la forme d'un arbre d'entraînement, avec l'arbre de sortie.

11. Installation d'ascenseur avec un système de moyen porteur portant et entraînant au moins une cabine d'ascenseur selon l'une des revendications 1 à 10.
